# EUROPÄISCHE PATENTSCHRIFT

(11) **EP 3 659 866 B1**
(45) Veröffentlichungstag und Bekanntmachung des Hinweises auf die Patenterteilung: **09.02.2022**
(21) Anmeldenummer: 19212744.7
(22) Anmeldetag: 29.11.2019
(51) Int. Cl.: B60R 11/02, B60P 3/36, B60R 15/00, B62D 33/06

(54) **NASSZELLE FÜR EIN WOHNMOBIL UND WOHNMOBIL**
WET CELL FOR A RECREATIONAL VEHICLE AND A RECREATIONAL VEHICLE
CELLULE HUMIDE POUR CAMPING-CAR ET CAMPING-CAR

(30) Priorität: 29.11.2018 DE 102018130340
(43) Veröffentlichungstag der Anmeldung: 03.06.2020
(73) Patentinhaber: Hymer GmbH & Co. KG, 88339 Bad Waldsee (DE)
(72) Erfinder: Steigmiller, Anton, 88444 Ummendorf (DE); Wiest, Hansi, 88339 Bad Waldsee (DE)
(74) Vertreter: Waller, Stefan

(56) Entgegenhaltungen:
- DE-A1-102010 015 241
- DE-U1- 20 003 780
- DE-U1-202004 016 586
- DE-U1-202009 004 485
- US-A- 5 100 196

## Beschreibung

Die Erfindung betrifft ein Wohnmobil nach Anspruch 1.

Aus dem Stand der Technik sind Nasszellen für Wohnmobile, Wohnwägen, oder dergleichen, hinreichend bekannt. Solche Nasszellen werden beispielsweise als Sanitärraum genutzt, wobei diese im Vergleich zu anderen Bereichen im Wohnmobil, z.B. zu Wohnbereichen im Wohnmobil, etc. in der Regel vergleichsweise wenig genutzt werden. Hieraus kann das Problem resultieren, dass ein ungünstiges Raumnutzungsverhältnis von Nasszelle und anderen Bereichen des Wohnmobils, etc., z.B. Wohnbereich vorliegt, d.h. dass ein Raumvolumen des gesamten Wohnmobils für die Nasszelle bereitgestellt wird, dieses jedoch entsprechend selten genutzt wird.

Aus dem Dokument US 5 100 196 A1 ist ein Wohnmobil nach dem Oberbegriff des Anspruchs 1 bekannt, wobei ein verschiebbar angeordnetes Schrankgehäuse je nach Benutzung der Nasszelle hinein oder heraus geschoben wird.

Es wäre daher vorteilhaft, eine Nasszelle bereitzustellen, die auch eine verbesserte Nutzung anderer Räume im Wohnmobil etc., beispielsweise Wohnraum, ermöglichen kann. Dementsprechend ist es Aufgabe der Erfindung, eine hinsichtlich Raumnutzung verbesserte Nasszelle für ein Wohnmobil, einen Wohnwagen oder dergleichen Reise- oder Freizeitfahrzeug bereitzustellen.

Ausgehend von einer Nasszelle für ein Wohnmobil oder Wohnwagen oder dergleichen Reise- oder Freizeitfahrzeug, wobei die Nasszelle mehrere Seitenwände umfasst und wobei die Nasszelle ein Raumvolumen umfasst, welches durch die Seitenwände definiert wird, ist erfindungsgemäß vorgesehen, dass zumindest eine Seitenwand zumindest in einem Abschnitt unterbrochen ist, wobei in dem Abschnitt ein Gehäuse mit einem Gehäusevolumen angeordnet ist, das in das Raumvolumen der Nasszelle hineinragend und das Raumvolumen der Nasszelle verringernd angeordnet ist.

Das verringerte Raumvolumen der Nasszelle kann nun entsprechend in einem Wohnbereich des Wohnmobils, etc. nutzbar sein. Beispielsweise kann das Gehäusevolumen als Stauraumvolumen im Wohnbereich verwendet werden, wodurch eine Nasszelle bereitgestellt wird, deren ursprüngliches Raumvolumen zur anderweitigen Nutzung in einem Wohnbereich reduziert wurde.

Um eine möglichst effiziente anderweitige Nutzbarkeit des verringerten Raumvolumens der Nasszelle ermöglichen zu können, kann in einer vorteilhaften Ausgestaltung der Erfindung vorgesehen sein, dass das Gehäusevolumen vollständig innerhalb der Nasszelle angeordnet ist.

Das Gehäusevolumen ist von dem Raumvolumen der Nasszelle räumlich getrennt. Auf diese Weise kann das Gehäusevolumen unabhängig von der Nutzung der Nasszelle verwendet werden.

Die Erfindung betrifft ein Wohnmobil oder Wohnwagen oder dergleichen Reise- oder Freizeitfahrzeug nach Anspruch 1. Ein derartiges Wohnmobil ist hinsichtlich der Nutzbarkeit des gesamten Wohnbereichs verbessert.

Das Gehäusevolumen ist von dem Wohnraum aus zugänglich und von einem Raumvolumen der Nasszelle räumlich getrennt.

Auf diese Weise kann das Gehäusevolumen unabhängig von der Nutzung der Nasszelle verwendet werden. In dem Gehäusevolumen ist ein TV-Gerät angeordnet. Auf diese Weise lässt sich ein TV-Gerät besonders platzsparend außerhalb der Nasszelle im Wohnbereich eines Wohnmobil, etc. anordnen, indem Raumvolumen der Nasszelle hierfür verwendet bzw. bereitgestellt wird.

Nachfolgend wird die Erfindung anhand von Zeichnungen beschrieben.

Es zeigt hierbei
- Fig. 1: eine vereinfachte räumliche Darstellung einer Nasszelle für ein erfindungsgemäßes Wohnmobil,
- Fig. 2: eine stark vereinfachte Schnittdarstellung einer erfindungsgemäßen Nasszelle und
- Fig. 3:: eine stark vereinfachte schematische Darstellung eines Wohnmobils mit Nasszelle.

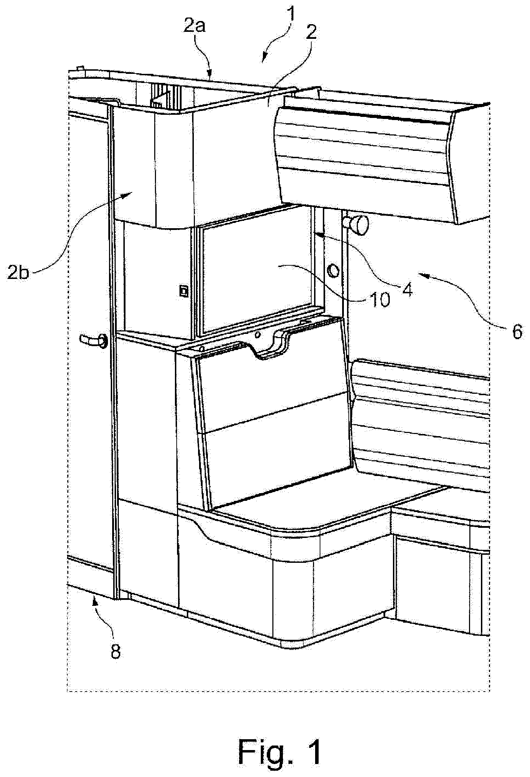

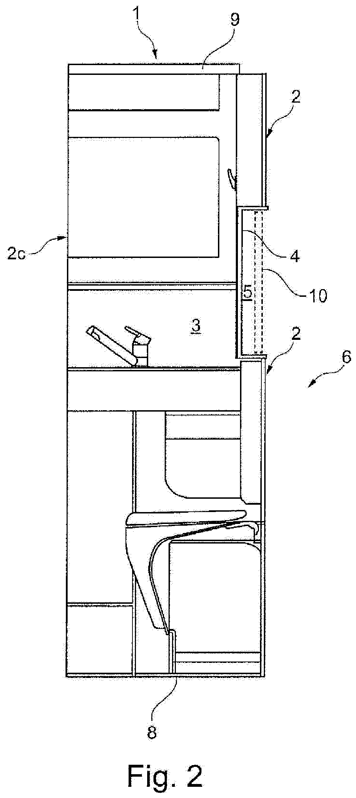

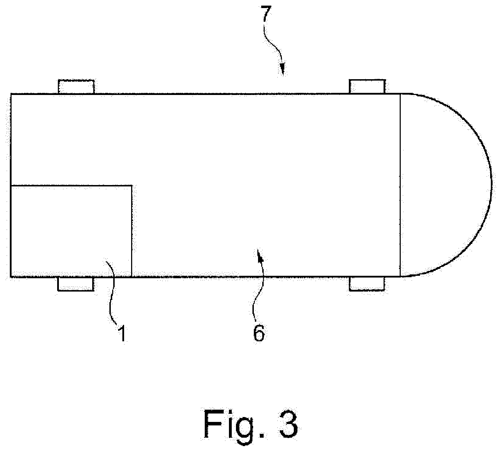

In der Fig. 1 ist eine Nasszelle 1 für ein Wohnmobil 7 oder Wohnwagen (siehe Fig. 3) oder dergleichen Reise- oder Freizeitfahrzeug dargestellt. Die Nasszelle 1 umfasst mehrere Seitenwände 2, 2a, 2b (Seitenwand 2c siehe Fig. 2) sowie ein Raumvolumen 3, das durch die Seitenwände 2, 2a, 2b definiert wird. Die Nasszelle 1 umfasst ferner einen Bodenbereich 8 und einen Deckenbereich 9. In der Fig. 1 ist zudem ein Ausschnitt eines Wohnbereichs 6 schematisch dargestellt.

Eine Seitenwand 2 der Nasszelle 1 ist in einem Abschnitt unterbrochen, wobei in dem Abschnitt ein Gehäuse 4 mit einem Gehäusevolumen 5 angeordnet ist, das in das Raumvolumen 3 der Nasszelle 1 hineinragend und das Raumvolumen 3 der Nasszelle 1 verringernd angeordnet ist (siehe Fig. 2).

Das Gehäusevolumen 5 ist im gezeigten Ausführungsbeispiel vollständig innerhalb der Nasszelle 1 angeordnet, wodurch eine möglichst effiziente anderweitige Nutzbarkeit des verringerten Raumvolumens der Nasszelle ermöglicht werden kann, indem das Gehäusevolumen 5 zum Wohnbereich 6 (siehe auch Fig. 1) ausgerichtet und von dort aus nutzbar ist. Das Gehäusevolumen 5 wird zur Aufnahme für ein TV-Gerät 10 eingesetzt. Entsprechend umfasst das Gehäusevolumen 5 ein TV-Gerät 10 (siehe Fig. 1).

## Patentansprüche

1. Wohnmobil oder Wohnwagen oder dergleichen Reise- oder Freizeitfahrzeug, umfassend einen Wohnbereich (6) und eine Nasszelle (1), wobei die Nasszelle (1) mehrere Seitenwände (2, 2a, 2b) umfasst und ein Raumvolumen (3) umfasst, welches durch die Seitenwände (2, 2a, 2b) definiert wird, wobei zumindest eine Seitenwand (2, 2a, 2b) zumindest in einem Abschnitt unterbrochen ist und in dem Abschnitt ein Gehäuse (4) mit einem Gehäusevolumen (5) angeordnet ist, das in das Raumvolumen (3) der Nasszelle (1) hineinragend und das Raumvolumen (3) der Nasszelle (1) verringernd angeordnet ist, wobei das Gehäusevolumen (5) von einem Wohnbereich (6) aus zugänglich ist und von dem Raumvolumen (3) der Nasszelle (1) räumlich getrennt ist,
**dadurch gekennzeichnet,**
**dass** in dem Gehäusevolumen (5) ein TV-Gerät angeordnet ist.

2. Wohnmobil nach Anspruch 1,
**dadurch gekennzeichnet,**
**dass** das Gehäusevolumen (5) vollständig innerhalb der Nasszelle (1) angeordnet ist.

## Claims

1. Motorhome or caravan or similar touring or recreational vehicle, comprising a living area (6) and a wet cell (1), wherein the wet cell (1) comprises a plurality of sidewalls (2, 2a, 2b) and comprises a three-dimensional volume (3) which is defined by the sidewalls (2, 2a, 2b), wherein at least one sidewall (2, 2a, 2b) is interrupted at least in one section, and the section contains a housing (4) with a housing volume (5) which is arranged so as to project into the three-dimensional volume (3) of the wet cell (1) and so as to reduce the three-dimensional volume (3) of the wet cell (1), wherein the housing volume (5) is accessible from a living area (6) and is spatially separated from the three-dimensional volume (3) of the wet cell (1),
**characterized**
**in that** a TV set is arranged in the housing volume (5).

2. Motorhome according to Claim 1,
**characterized**
**in that** the housing volume (5) is completely arranged within the wet cell (1).

## Revendications

1. Camping-car ou caravane ou véhicule de voyage ou de loisir similaire, comprenant une zone de séjour (6) et une cellule humide (1), la cellule humide (1) comprenant plusieurs parois latérales (2, 2a, 2b) et comprenant un volume d'espace (3) qui est défini par les parois latérales (2, 2a, 2b), au moins une paroi latérale (2, 2a, 2b) étant interrompue au moins dans une partie, et dans la partie est disposé un logement (4) ayant un volume de logement (5) qui est disposé en faisant saillie dans le volume d'espace (3) de la cellule humide (1) et en diminuant le volume d'espace (3) de la cellule humide (1), le volume de logement (5) étant accessible à partir d'une zone de séjour (6) et étant séparé physiquement du volume d'espace (3) de la cellule humide (1),
**caractérisé en ce qu'**un poste de télévision est disposé dans le volume de logement (5).

2. Camping-car selon la revendication 1, **caractérisé en ce que** le volume de logement (5) est disposé entièrement à l'intérieur de la cellule humide (1).
